# EUROPEAN PATENT APPLICATION

(11) **EP 1 650 280 A1**
(43) Date of publication of application: **26.04.2006**
(21) Application number: 04105154.1
(22) Date of filing: 19.10.2004
(51) Int. Cl.: C09J 7/04

(54) **Adhesive articles comprising fibrous webs**

(71) Applicant: 3M Innovative Properties Company, St. Paul, Minnesota 55144-1000 (US)
(72) Inventor: Swan, Mike, c/o 3M Europe s.a., 1831, Diegem (BE); Sikkel, Bernard, c/o 3M Europe s.a., 1831, Diegem (BE)
(74) Representative: Voortmans, Gilbert J.L.

(57) **Abstract**

The invention relates to an adhesive article comprising a fibrous web, said fibrous web having opposite first and second major surfaces, both of said first and second major surfaces being provided with an adhesive layer comprising an adhesive composition, wherein said fibrous web has a thickness of at least 2 mm and wherein at least a portion of said fibers in the fibrous web extend from said first to said second major surface and are in bonding engagement with the adhesive layers provided on said first and second major surface or are capable of being bonded to each other so as to form fibers which extend from said first to said second major surface and are in bonding engagement with the adhesive layers provided on said first and second major surface.

## Description

The present invention relates to adhesive articles using fibrous webs in combination with adhesive layers. The adhesive articles may have the capability of distributing and transferring stress within and between structural layers and may provide good gap filling properties. The adhesive articles may be particularly useful in bonding or stiffening components in motor vehicles.

Adhesives and sealers used in automotive production are classified as structural, semi-structural and non-structural, depending on their bond strength and elasticity. They are usually homogeneous pastes, liquids or tapes of different gap fill capacity, tensile strength and modulus, which build up strength by a number of different cross-linking chemistries. There is increasing demand for structural and semi structural adhesives in automotive applications. This is because joining with adhesives turns out to be of lower cost and more efficient than welding or methods of mechanical fastening. Adhesive bonding is essential for aluminium in vehicles and also for composite or other hybrid constructions.

Structural and semi-structural adhesives are often used to provide additional stiffness, fatigue and impact performance to body components and may be used in bonding stiffeners such as striker pin reinforcements; door handle reinforcements and other types of reinforcement brackets in vehicles where higher strength, stiffness or fatigue properties are required than may be available from other methods of joining such as welding, brazing or riveting for the same substrate thickness.

Adhesives used in the automotive industry should be able to absorb tolerance variations between components during the joining process and to allow movement, such as differential expansion, during oven cycles. Normal joint gaps can vary in size by as much as 2 or 3 mm, and to bridge such a gap without reduction in performance or fluttering of the bonded parts, large quantities of adhesive are often required. In order to limit the cost of the adhesive which is used for gap filling, the respective adhesives are often highly filled. This leads to less than optimised weight and reduced vehicle efficiency. Environmentally less desirable polymer bases like PVC are also frequently used to minimise costs.

To provide gap-filling properties, expanding adhesives have been developed, which incorporate micro-balloons or blowing agents which are heat activated, e.g. during a bake cycle. The problem with this approach is that the multidirectional and uneven expansion of such adhesives is difficult to control. Thus, it is frequently difficult to determine how much adhesive needs to be applied and how the final orientation of the adhesive in the vehicle is going to affect expansion. In addition, the performance of the adhesive, such as its strength or its attachment to a substrate, may be impaired because of its foam construction. Foaming adhesives are often applied as castings or extrusions, kept in place by expensive clips or secondary adhesives and fastenings.

Thus, when using expanding adhesives, it is difficult to provide a sufficient initial flexibility to accommodate variable gaps and, at the same time, optimum physical properties such as an E-modulus of the cured adhesive which gives rise to improved fatigue and crash behaviour due to the possibility of stress distribution. Moreover, adhesives which possess acceptable gap filling properties may not always have sufficient bond strength to the substrates to which they are applied. Finally, particularly in automotive applications, adhesives should preferably be compatible with oily surfaces as substrates to avoid the need for a pre-treatment of such surfaces.

A further problem with application of large masses of bulk adhesive in contact with closure panel skins as they are used e.g. in automotive industry is the contraction of the adhesive during curing/polymerisation. As a result, the outline of the adhesive may be discernible as a ghost on the outer skin. Very small contractions can be visible, and the read-through affects vehicle appearance and perceived value.

Particularly for applications in the automotive industry, it is thus desirable to provide an adhesive system which combines the initial flexibility required for the filling of variable gaps with optimum physical properties of the cured/polymerised adhesive system, such as sufficient strength, a suitable E-modulus, fatigue resistance and the ability to disperse impact stresses. The adhesive system should be convenient to handle and to apply, and it should have a high bond strength to a variety of surfaces as substrates, such as lubricated surfaces, without requiring their pre-treatment, such as a cleaning or a coating of the surfaces. Finally, the cured adhesive should be compatible with a number of chemical treatments to which the bonded product may be subjected, such as a phosphate wash carried out during paint line processing.

Adhesive tapes which are reinforced by fiber webs are disclosed in US 2002/0182955 A1, which relates to a structural bonding tape combining an adhesive material and a fiber web, in DE 199 31 241 A1, which relates to an adhesive film for structural bonding and in JP-A- 10-245534, which relates to a reinforced pressure sensitive adhesive tape.

In a first embodiment, an adhesive article is provided which comprises a fibrous web, said fibrous web having opposite first and second major surfaces, both of said first and second major surfaces being provided with an adhesive layer comprising an adhesive composition,
wherein said fibrous web has a thickness of at least 2 mm
and wherein at least a portion of said fibers in the fibrous web are in bonding engagement with the adhesive layers provided on said first and second major surface and extend from said first to said second major surface or are capable of being bonded to each other so as to form fibers which extend from said first to said second major surface.

An advantage of the above system lies in the combination of the bond strength of the adhesive with the flexibility and resilience of the above defined fibrous web, which may be used to occupy variable volumes, to disperse stress and/or to dampen vibrations. Fibrous structures may be very efficient in transferring and distributing loads, as can be illustrated by many plant and animal structures which use the same technique. Via selection of different types of adhesives and fibrous webs, adhesive articles can be designed which are suitable to cover a wide variety of applications. Typically, the fibrous web is a non-woven fibrous web.

In a second embodiment, the invention provides an adhesive article comprising a fibrous web, said fibrous web having opposite first and second major surfaces, said first major surface being provided with an adhesive layer comprising an adhesive composition
wherein said fibrous web has a thickness of at least 2 mm and wherein at least a portion of said fibers in the fibrous web extend from said first major surface, where they are in bonding engagement with the adhesive layer provided on said first major surface, to said second major surface. When two substrates are provided each with at least one of the adhesive articles of the second embodiment which is bonded to the substrate by means of its adhesive layer, the substrates can be brought together to achieve an engagement of at least a part of the fibers of the adhesive articles. The engaged fiber structures are particularly suited to bridge variable distances between the substrates while providing positional stability to the substrates in directions perpendicular to the thickness direction of the fibrous webs. If the engaged fiber structures comprise fibers which are capable of bonding to each other, fiber-fiber bonds can be formed in order to stabilize the engagement of the two substrates.

Thus, in a first aspect, the invention solves the problem of bonding and filling a gap between two or more substrates by means of an adhesive article comprising a fibrous web provided on both its first and second surface with an adhesive layer. Such an article will generally have a low density and will therefore stay in place by compression in a joint or simply by the level of tack initially achieved. Application of such an article by hand can be fast and convenient.

The fibrous web generally has good compressibility and may act as a spring providing pressure to the adhesive on the substrate once the substrates to be bonded are brought together. The adhesive layer can then bond to complex profiles without the need for an expanding adhesive.

Fibers may be selected for the fibrous web which have the capability of stiffening and/or crosslinking after they have been fitted between substrates to be bonded to provide optimum gap fill and strength. Also, the compressive strength of the cured adhesive article may be optimised by using fibrous webs which, after having been applied in the desired position, may be treated to increase their stiffness.

The resulting joint construction may provide anti flutter and gap filling properties and/or enhanced energy transfer between substrates by distributing the load across the complete surface of the bond between the substrates and minimizing stress concentrations typically found at edges of joints made with structural or semi-structural adhesive systems. A particular feature of the adhesive article is the ability to fill variable gaps between substrates and to allow movement such as differential expansion during oven cycles. Further properties may include the ability to occupy variable volumes while providing no squeeze-out of a liquid or paste filling system. In addition the use of the adhesive articles allows the use of adhesives which impart special structural features such as no read- through, anisotropy, high impact strength or easy panel dismantling for recycling. In addition, the adhesive article according to the invention offers sound and vibration insulation.
- Fig. 1: gives a schematic view of a vertical cross lapped fibrous web for use in the present invention.
- Fig.2: gives a schematic view of an adhesive article according to the invention bonding two substrates.
- Fig.3: gives a schematic view of a further adhesive article according to the invention bonding two substrates.
- Fig.4: gives a schematic view of the adhesive article shown in Fig. 3 which bonds two profiled substrates.

### Fibrous web

A variety of fibrous webs can be used for the purpose of the present invention, provided that they fulfill the following requirements with respect to thickness and fiber orientation.

The thickness of the fibrous web is defined as the shortest distance in an uncompressed state between its first and second major surface. The fibrous web has a thickness of at least 2 mm, such as 4 mm or more, 6 mm or more, 8 mm or more or even 10 mm or more. Generally, its thickness is not more than 30 mm, such as 25 mm or less or 20 mm or less.

Generally, the fibrous web has a basis weight ranging from 10 g/m² to 1 kg/m². For example, the web may have a basis weight of 50 g/m² or above, such as 100 g/m² or above or 150 g/m² or above. Depending on the application of the adhesive articles, fibrous webs may also be used having a basis weight of 200 g/m² or more, such as 250 g/m² or above, 300 g/m² or above, 350 g/m² or above or 400 g/m² or above.

The type of fibers to be used in the fibrous web may be selected according to the respective application. Typical examples are polyolefin fibers such as polyethylene, or polypropylene, polystyrene fibers, polyether fibers, polyester fibers such as polyethylene terephthalate (PET) or polybutaline terephthalate (PBT) fibers, vinyl polymer fibers such as polyvinyl chloride and polyvinylidene fluoride, polyamides such as polycaprolactame, polyurethanes, nylon fibers, polyaramide fibers (such as Kevlar® fibers). Alternatively or in addition, the fibrous web may contain metal fibers, metal coated fibers, fibers coated with other conductive materials or carbon fibers. Preferred examples are PET fibers and polyaramide fibers. Also, blends of two or more of the above types of fibers may be used to provide fibrous webs in the adhesive articles of the invention. Typically the above mentioned fibers would be blended with thermal bond fibers, using amounts of the thermal bond fibers of 10 % by weight or more, such as 15 % by weight, based on the total amount of fibers in the fibrous web. Generally, 30 % by weight or less or 20 % by weight or less of the thermal bond fibers are sufficient to provide additional integrity to the fibrous web.

Generally, the fibers of the fibrous web have a diameter of at least 1 denier (den). Preferred are values of not less than 5 den, such as 10 den or above or 15 den or above. Preferably, the fibers should have not have more than 100 den, for example 50 den or less.

The portion of the fibers of the fibrous web which extend from the first to the second major surface of the fibrous web or which can be bonded to each other so as to form fibers extending from the first to the second major surface is normally 20 % or more or 40 % or more, preferably 60 % or more or 70 % or more, still preferably 80 % or more or 90 % or more, based on the total number of fibers in the fibrous web as 100 %.

It should be understood that in the context of the present invention, the term "fibers which extend from one major surface to the second major surface" embraces combinations of two or more fibers which are bonded to form a combined fiber which extends from one major surface to the second major surface of the fibrous web. Generally, these combined fibers comprise a link between the two major surfaces of the web via not more than three, preferably not more than two bonded single fibers.

Generally, a larger portion of fibers of the fibrous web which extend from the first to the second major surface or which can be bonded to each other so as to form fibers extending from the first to the second major surface increases the tensile strength of the fibrous web and of the adhesive article in its thickness direction. The tensile strength of the adhesive article may determine, in turn, the strength of the bond formed between substrates bonded by the adhesive article according to the invention. Thus, the portion of fibers of the fibrous web which extend from the first to the second major surface or which can be bonded to each other so as to form fibers extending from the first to the second major surface may be selected so as to provide an tensile strength which is adapted to the desired application of the adhesive article. For example, the tensile strength of the fibrous web in its thickness direction, may have values of 0.1 MPa or more, such as 0.2 MPa or 0.5 MPa or more. Other applications may require a tensile strength of 1 MPa or more.

The tensile strength of the fibrous web sample may, for example, be measured by adhering its first and second major surface each to the base surface of an aluminum T-piece covering the complete surface of the web sample. Subsequently, tensile strength of the web can be measured using a conventional tensometer, e.g. an Instron 4501 tensile tester at a cross head speed of 100mm/minute.

In one embodiment, the fibers which extend from one major surface to the other major surface of the fibrous web or which can be bonded to each other so as to form fibers extending from the first to the second major surface are oriented towards the thickness direction of the fibrous web. In the context of the present invention, a fiber is oriented towards the thickness direction of the web if the axis of its main elongation lies in the thickness direction or deviates from the thickness direction by an angle of not more than 45° or not more than 40°, preferably by not more than 30°, and particularly preferred is a deviation by not more than 20° or 10°. Fibers which are sufficiently long to extend from the first to the second major surface of the fibrous web more than once are referred to as being oriented towards the thickness direction as defined above if the fiber segments extending from the first to the second major surface have the required orientation.

Preferably, the fibers defined above are present in a fibrous web as staple fibers. In addition, the web may contain thermal bond fibers which may be used to give further strength to the fibrous web. Such thermal bond fibers are known in the art, and typical examples of such fibers are bicomponent fibers (also known as Bico fibers) Generally, these thermal bond fibers have a fiber diameter of 1 to 20 den, preferably of not more than 15 or not more than 10 den.

In cases where a fibrous web is used for the present invention which comprises staple fibers and thermal bond fibers, at least a portion of the staple fibers of the fibrous web extend from its first to its second major surface or can be bonded to each other so as to form fibers extending from the first to the second major surface. In this case, the portion of staple fibers in the fiber web which fulfills the above requirements is 20% or more or 40 % or more or 50 % or more, preferably 60 % or more or 70 % or more, particularly preferred are 80 % or more or 90 % or more, based on the total number of staple fibers in the fiber web as 100 %.

As fibers that do not extend from the first to the second major surface but which have the capability of being bonded to each other so as to form fibers that extend from the first to the second major surface, fibers may be used that can be bonded to each other, e.g., by cross-linking or melt-bonding, thereby forming a combined fiber that extends from the first to the second major surface. Such fibers may be bonded to each other simultaneously upon bonding of two substrates together with the adhesive article or they may be bonded in a separate step, e.g. following bonding of the substrates together. Suitable fibers that are capable of bonding to each other include thermal bond fibers or fibers that are coated or otherwise provided with a cross-linkable composition.

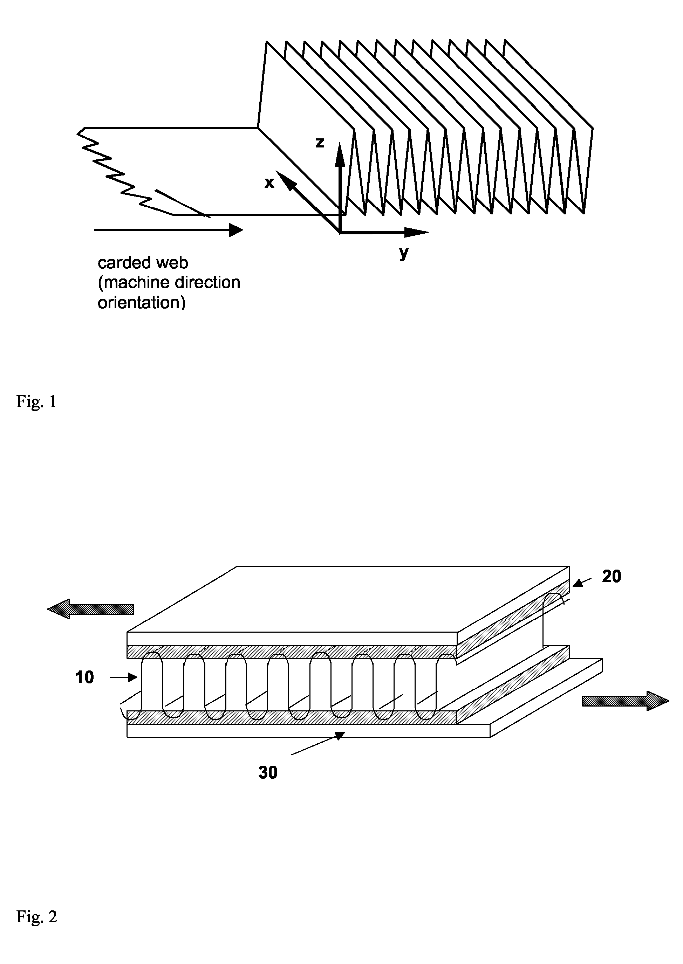

One preferred method of providing fibrous webs containing fibers having the desired orientation is known as vertical lapping or vertical cross lapping (VCL). Vertical cross lapping yields a corrugated fibrous web by vertically folding a carded fibrous web. Fig. 1 provides a schematic view of such a vertically cross lapped web. This figure also demonstrates that the fibers which are initially oriented in the y-direction in the carded web used as a starting product in the VCL process, are oriented towards the z-direction (or the thickness direction) of the fibrous web resulting from the process. Thermal bond fibers may help to stabilize the corrugated structure of the vertically cross lapped web. These thermal bond fibers may be activated after the lapping process, e.g. by passing the web through a thermal bond oven. Suitable techniques of vertical cross lapping are established in the art, and the equipment necessary to obtain a VCL web is available under the trade name "Struto" or "Wavemaker". Such techniques are also disclosed in US 6,602,581 and literature cited therein. An adhesive article using a vertically cross lapped fibrous web (10) provided with two layers of an adhesive composition (20) which bonds two substrates (30) is schematically shown in Fig. 2.

Alternatively, the fibrous webs may be obtained as arrays of fibers which are preferably oriented towards the thickness direction of the fibrous web by flocking fibers onto an adhesive layer. This flocking technology yields, in a first stage, an adhesive article according to the second embodiment of the invention which is provided with an adhesive layer on the first the major surfaces of the fibrous web. Thus, flocking can be used to provide an adhesive article comprising a fibrous web wherein more than 90 % or 95 %, preferably 100 % of all fibers extend from the first major surface to the second major surface of the fibrous web and are oriented in the thickness direction of the web. This results in a very strong, high compression strength structure. If fibers with an extended head structure on one or on both ends are used, such as a "mushroom head", an enhanced bonding of the fibers in the adhesive layer can be achieved.

Onto the brush-like structures which result from the above flocking technology, a second adhesive layer can be applied to the second major surface in order to obtain an adhesive article in accordance with the first embodiment of the invention having its first and second major surface provided with an adhesive layer.

Fibrous web structures obtainable, e.g., from the above flocking technology are suitable as adhesive articles according to the second embodiment of the invention. In this case, they are provided with only one adhesive layer, which is present on one of the first or second major surfaces of the web. Two or more of these brush like structures, wherein more than 90 % or 95 %, preferably 100 % of all fibers extend from the first major surface to the second major surface of the fibrous web and are oriented in the thickness direction of the web can be engaged simply by pushing the fibers of two of these structures together.

When two adhesive articles according to the second embodiment of the invention are combined by engaging at least a part of the fibers of their fibrous webs, the resulting engagement is preferably reversible. It is further preferred that the relative position of the two adhesive articles in a state where their fibers are engaged may be varied in one direction, such as the thickness direction of the adhesive articles, while the engagement provides stability in the remaining two directions. Generally, those fibers which extend from the first to the second major surface of the respective adhesive articles are those which provide the engagement.

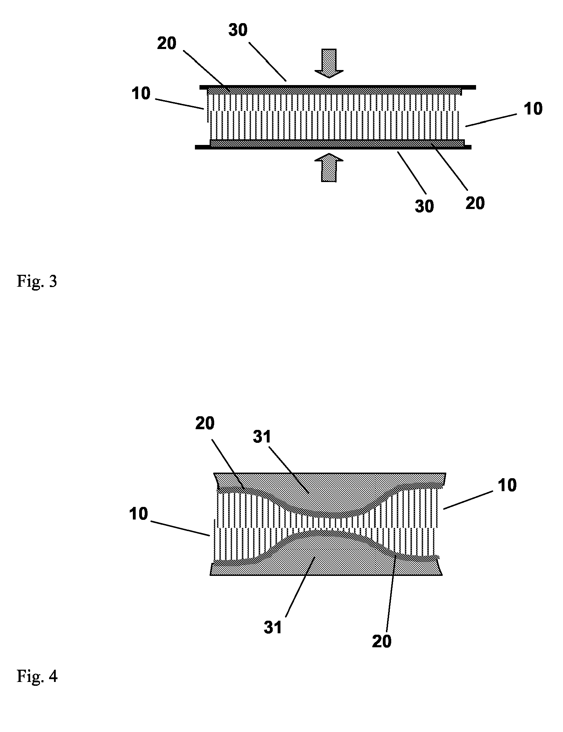

Fig. 3 shows a combination two of the adhesive articles according to the second embodiment of the invention each of which is provided with one adhesive layer (20) and bonded to a substrate (30). The fibers forming the fibrous webs (10) of the adhesive articles have been pushed together to provide engagement.

Once two or more adhesive articles according to the second embodiment of the invention are in the desired position relative to each other and at least part of their fibers are engaged, fiber-fiber bonds may be formed between the engaged fibers of the two or more adhesive articles. For this purpose, the fibrous webs used in the adhesive articles according to the second embodiment of the invention may comprise fibers which are capable of bonding to each other. Typically, the fibers which are capable of being bonded to each other are those which extend from the first to the second major surface of the adhesive article. The fibers can be bonded together either by use of a chemical bond, such as a crosslinking reaction or any other type of curing reaction, or by mechanical interlocking. Chemical bonds between the fibers are preferred. Suitable methods for forming fiber-fiber bonds between two or more adhesive articles according to the second embodiment of the invention may, for example, be chosen from those disclosed in the context of the stiffening of a fibrous web below. For example, thermal bond fibers may be used or the fibers may be coated with an activatable adhesive composition as defined below to enable fiber bonding e.g. during an oven bake cycle.

Using the adhesive articles according to the second embodiment of the invention, prior to forming fiber-fiber bonds, a connection can be established between two substrates which is stable in two directions but remains variable in the thickness direction of the fibrous webs. Such an application is useful for recycling purposes. Alternatively, by bonding together at least part of the fibers in the combined fibrous webs, a bond can be formed between the substrates which combines initial flexibility with high strength and superior stress transfer properties in the thickness direction of the webs after the bond between the fibers of the webs has been achieved.

Two adhesive articles according to the second embodiment being provided with one adhesive layer described above may be combined and bonded to each other via fiber-fiber bonds to form an adhesive article having two adhesive layers, i.e. an adhesive article according to the first embodiment of the invention.

Alternatively, two or more adhesive articles having one adhesive layer may first be bonded to two separate substrates and the resulting substrates carrying the adhesive articles may be then be combined by pushing together the fibrous webs. As set out above, the fibers of the two combined fibrous webs may then be further chemically or mechanically bonded to provide stability in the thickness direction of the fibrous web. Thus, a preferred method of bonding at least two substrates using the adhesive article according to the second embodiment of the invention comprises the following steps:
a) bonding a first adhesive article according to the second embodiment of the invention by means of its adhesive layer to a first substrate;
b) bonding a second adhesive article according to the second embodiment of the invention by means of its adhesive layer to a second substrate;
c) bringing the first substrate in proximity to the second substrate so that the adhesive articles are interposed between the first and the second substrate and at least a part of the fibers of the first and second adhesive article are engaged with each other; and,
d) optionally forming fiber-fiber bonds between the engaged fibers of the first and second adhesive article.

Before the fibers of two of these brush-like structures are bonded together, their increased variability in the thickness direction makes them particularly suitable for bonding profiled surfaces, as shown in Fig. 4. In this figure, two profiled surfaces (31), each bonded to a adhesive article having an adhesive layer (20) to which fibrous webs (10) were applied in a brush like manner, are combined.

The adhesive articles of the present invention comprising a fibrous web can be specifically designed to turn from an initially soft, flexible state to a more stiff or rigid state which provides a high degree of strength, impact and compression resistance after its application in the desired position. Preferably, this transformation should not be completed before the adhesive composition has at least initially bonded to the substrate(s) to which the adhesive article has been applied.

Stiffening of the fibrous web can be achieved by a variety of methods. For example, the fibrous web may comprise a composition that, upon activation to heat, actinic radiation or electron beam irradiation, causes fixation of the fibers to one another or fixation of the fibers in a matrix so as to cause reduced compressibility of the fibrous web or a loss of compressibility.

For example, thermal bond fibers, such as those defined above may also be used to increase the stiffness of the fibrous web after the adhesive articles of the invention have been applied to a substrate. If desired, two different types of thermal bond fibers may be included into the fibrous web which are activated at different temperatures. Thus, the first type of thermal bond fibers may serve for stabilizing the web after vertical lapping, and the second type for further stiffening the web at the site of use of the adhesive article. For example, such thermal bond fibers may be fibers of a sheath/core type. Generally, sheath/core fibers are made of thermoplastic materials with a core of a high melting point polymer and a sheath of a low melting point polymer. On heating, the sheath softens and bonds to local fibers. It is possible to use thermoset resins in the sheath or even the core that flow and stiffen on heating. Again, one might also envisage a structure with two different sheath core fibers. One of the fibers softens at a low temperature and is used to bond a soft structure together for putting in place. Then, the second fiber would stiffen the structure on heating to a higher temperature.

One or both of the first and the second major surfaces of the fibrous web may be provided with an adhesive layer comprising an adhesive composition. In order to provide sufficient bond strength, fibers of the fibrous web should be in close contact with the adhesive layer. Preferably, the fibers present at the surface(s) of the fibrous web to be provided with an adhesive layer should be partly embedded in the adhesive layer. Thus, one method of bringing the fibers which extend from the first to the second major surface of the adhesive article or which can be bonded to each other so as to form fibers which extend from the first to the second major surface into bonding engagement with the adhesive layer(s) provided on the first and/or the second major surface is to partly embed these fibers into the adhesive layer(s).

On the other hand, the fibrous web should preferably not be fully impregnated with the adhesive layer, so as to maintain its flexibility and its reversible compressibility. Typically, an adhesive layer extends into the fibrous web by not more than 30 % of the total thickness of the fibrous web, preferably not more than 20 % or not more than 10 %.

### Adhesive layer

An adhesive layer which is present in the adhesive articles of the present invention comprises an activatable adhesive composition and/or a pressure sensitive adhesive composition.

The term 'activatable adhesive composition', as it is used in the context of the present invention, refers to an adhesive composition that requires activation to form a bond, in particular a permanent bond. By 'activation' is meant that the adhesive composition is exposed to heat or is irradiated with, for example UV, visible light or e-beam to cause the bond to form. Generally, a structural bond should be formed that has a shear strength of at least 2 MPa, preferably at least 6.9 MPa, more preferably at least 15MPa measured according to ASTM D-1002-94. The structural bond preferably has a T- peel strength of at least 50N/25mm, more preferably at least 100N/25mm when tested according to the methods outlined under ASTM D1876. The activatable adhesive composition may or may not have pressure sensitive adhesive properties, and, when present, these may not be retained through a typical activation cycle used in forming a permanent or structural bond. Exemplary activatable adhesive composition having pressure sensitive properties which may also be used for the adhesive articles of the present invention are disclosed in US 5,086,088 and in WO 92/20754.

If desired, the adhesive articles of the present invention may be provided with adhesive properties before their activation by including into the adhesive layer a pressure sensitive adhesive. For example, the activatable adhesive composition and the pressure sensitive adhesive may be present in the adhesive layer in the form of a multitude of separate domains, each of said domains defining a part of the surface of the adhesive layer. Alternatively, the pressure sensitive adhesive composition may form a thin layer on the activatable adhesive composition, as disclosed in US 5,593,759, or the pressure sensitive and the activatable adhesive composition may be distributed in the adhesive layer as disclosed in US 5,585,178.

### Activatable adhesive composition

Upon activation, the activatable adhesive composition may cross-link or cure, i.e. a so-called thermosetting adhesive, or the adhesive composition may melt, thereby wetting out the surface and forming a bond upon cooling. Still further, the activatable adhesive composition may be comprised of a so-called hybrid material as defined below.

The term "thermosetting" as used herein refers to a material, which undergoes a curing reaction that results in a chemical change upon bonding and an increase in the hardness of the material. The term "thermoset" as used herein refers to a thermosetting material, which has been cured. A thermosetting material may generally be bonded by application of heat, actinic radiation such as UV, visible, or infrared, or microwave or X-ray energy.

The term "thermoplastic" as used herein refers to a material which undergoes a physical change upon the application of heat, i.e., the material flows upon bonding and returns to its initial non-flowing state upon cooling. A thermoplastic material is typically bonded by application of heat.

The term "hybrid material" refers to a material which is a combination of at least two components, wherein the at least two components are compatible in the melt phase (the melt phase is where the combination of the at least two components is a liquid), the at least two components form an interpenetrating polymer network or semi-interpenetrating polymer network, and at least one component becomes infusible (i.e., the component cannot be dissolved or melted) after application of heat or by other means of curing such as application of light. A hybrid material will be described in more detail below. A hybrid material may generally be bonded by application of heat, actinic radiation such as UV, visible, or infrared, or microwave or X-ray energy.

A hybrid material is, for the purpose of the present invention, mutually exclusive of the classes of thermosetting and thermoplastic materials defined herein. In other words, thermosetting materials and any optional additives or thermoplastic materials and any optional additives will be considered non-hybrid materials if they do not meet the definition of hybrid material as defined herein.

Exemplary activatable compositions for use in the present invention are those referred to as adhesive material in US 2002/0182955 A1, the curable compositions of US 6,057,382 or those listed in the following

Suitable thermosetting materials include epoxides, urethanes, cyanate esters, bismaleimides, phenolics, including nitrile phenolics, and any combinations thereof.

Suitable epoxides include those containing at least two 1,2-cyclic ethers. Such compounds can be saturated or unsaturated, aliphatic, aromatic or heterocyclic, or can comprise combinations thereof. Suitable epoxides may be solid or liquid at room temperature.

Compounds containing at least two epoxide groups (i.e., polyepoxides) are preferred. A combination of epoxide compounds may be employed, and an epoxide having a functionality of less than two may be used in a combination so long as the overall epoxide functionality of the mixture is at least two. The polymeric epoxides include linear polymers having terminal epoxy groups (e.g., a diglycidyl ether of a polyoxyalkylene glycol), polymers having skeletal oxirane units (e.g., polybutadiene polyepoxide), and polymers having pendent epoxy groups (e.g., a glycidyl methacrylate polymer or copolymer). It is also within the scope of this invention to use a material with functionality in addition to epoxide functionality but which is essentially unreactive with the epoxide functionality, for example, a material containing both epoxide and acrylic functionality.

A wide variety of commercial epoxides are available and listed in "Handbook of Epoxy Resins" by Lee and Neville, McGraw Hill Book Company, New York (1967) and in "Epoxy Resin Technology" by P. F. Bruins, John Wiley & Sons, New York (1968), and in "Epoxy Resins: Chemistry and Technology, 2nd Edition" by C. A. May, Ed., Marcel Dekker, Inc. New York (1988). Aromatic polyepoxides (i.e., compounds containing at least one aromatic ring structure, e.g., a benzene ring, and at least two epoxide groups) that can be used in the present invention include the polyglycidyl ethers of polyhydric phenols, such as Bisphenol A-or Bisphenol-F type resins and their derivatives, aromatic polyglycidyl amines (e.g., polyglycidyl amines of benzenamines, benzene diamines, naphthylenamines, or naphthylene diamines), polyglycidyl ethers of phenol formaldehyde resole or novolak resins; resorcinol diglycidyl ether; polyglycidyl derivatives of fluorene-type resins; and glycidyl esters of aromatic carboxylic acids, e.g., phthalic acid diglycidyl ester, isophthalic acid diglycidyl ester, trimellitic acid triglycidyl ester, and pyromellitic acid tetraglycidyl ester, and mixtures thereof. Preferred aromatic polyepoxides are the polyglycidyl ethers of polyhydric phenols, such as the series of diglycidyl ethers of Bisphenol-A commercially available from Shell Chemical Inc., Houston, Tex., for example, under the trade designations "EPON 828" and "EPON 1001 F" and the series of diglycidyl ethers of Bisphenol-A and Bisphenol F and their blends commercially available from Shell Chemical Inc., for example, under the trade designations "Epikote 232" and "Epikote 1001" available from Shell Chemical Inc., Pernis, The Netherlands. Other useful commercially available aromatic epoxides include the "DER" series of Bisphenol epoxides, and "DEN" series of epoxy novolak resins available from Dow Chemical, Midland, Mich., diglycidyl ether of fluorene Bisphenol, available from Shell Chemical Inc., Houston, Tex., under the trade designation "EPON HPT Resin 1079", a triglycidyl derivative of p-aminophenol commercially available from Ciba Performance Polymers, Brewster, N.Y. under the trade designation "MY 0500", a tetraglycidyl derivative of methylene dianiline commercially available from Ciba Performance Polymers, Brewster, N.Y. under the trade designation "MY 720". Flame retardant epoxides may also be used, for example, the flame retardant brominated Bisphenol-A diglycidyl ether commercially available from Dow Chemical, Midland, Mich., under the trade designation "DER 580". The term "derivative" as used herein with reference to thermosetting materials refers to a base molecule with additional substituents that do not interfere with the thermosetting bonding of the base molecule.

Representative aliphatic cyclic polyepoxides (i.e., cyclic compounds containing one or more saturated carbocyclic rings and at least two epoxide groups, also known as alicyclic compounds) useful in the present invention include the series of alicyclic epoxides commercially available from Union Carbide Corp., Danbury, Conn., under the trade designation "ERL", such as vinyl cyclohexene dioxide ("ERL-4206"), 3,4-epoxycyclohexylmethyl-3,4-epoxycyclohexane carboxylate ("ERL-4221 "), 3,4-epoxy-6-methylcyclohexylmethyl-3,4-epoxy-6-methylcyclohexane carboxylate ("ERL-4201"), bis(3,4-epoxy-6-methylcycylohexylmethyl)adipate ("ERL-4289"), and dipentenedioxide ("ERL-4269").

Representative aliphatic polyepoxides (i.e., compounds containing no carbocyclic rings and at least two epoxide groups) include 1,4-bis(2,3-epoxypropoxy)butane, polyglycidyl ethers of aliphatic polyols such as glycerol, polypropylene glycol, 1,4-butanediol, and the like, the diglycidyl ester of linoleic acid dimer, epoxidized polybutadiene (for example, those available under the trade designation "OXIRON 2001" from FMC Corp., Philadelphia, Pa. or "Poly bd" from Elf Atochem, Philadelphia, Pa.), epoxidized aliphatic polyurethanes, and epoxy silicones, e.g., dimethylsiloxanes having cycloaliphatic epoxide or glycidyl ether groups.

Examples of suitable epoxide-based bondable layers that are commercially available in film form include those available from Minnesota Mining and Manufacturing Company ("3M"), St. Paul, Minn. under the trade designation "3M Scotch-Weld Structural Adhesive Film" including those having the following "AF" designations: "AF 42", "AF 111 ", "AF 126-2", "AF 163-2", "AF 3109-2", "AF 191", "AF 2635", "AF 3002", "AF 3024", and "AF 3030FST".

In one embodiment, a thermosetting activatable adhesive comprises a fusible epoxide prepolymer (which can melt and flow unlike a B stage resin) which is a solid at room temperature and, more preferably, further comprises a second epoxide component which may be solid or liquid at room temperature. Suitable solid fusible epoxide prepolymers include those described above which are a solid at room temperature.

An exemplary activatable adhesive composition may comprise a solid fusible epoxide prepolymer comprising a diglycidyl ether of Bisphenol A alone or in combination with a diglycidyl ether of Bisphenol A or Bisphenol F or a blend thereof. The activatable adhesive composition is a solid at room temperature after the addition of any optional components, more preferably the epoxide material (comprising single or multiple epoxides) is a solid at room temperature.

The term "urethane materials" as used herein applies to polymers made from the reaction product of a compound containing at least two isocyanate groups (-N=C=O), referred to herein as "isocyanates", and a compound containing at least two active-hydrogen containing groups. Examples of active-hydrogen containing groups include primary alcohols, secondary alcohols, phenols and water; and primary and secondary amines (which react with the isocyanate to form a urea linkage). A wide variety of isocyanate-terminated materials and appropriate co-reactants are well known, and many are commercially available (see for example, Gunter Oertel, "Polyurethane Handbook", Hanser Publishers, Munich (1985)).

In order to prepare storage-stable bondable layers based on urethane materials it is preferable to use either an isocyanate or an active hydrogen-containing compound that is blocked. The term "blocked" as used herein refers to a compound that has been reacted with a second compound (i.e. "blocking group") such that its reactive functionality is not available until such time as the blocking group is removed, for example by heating, or by further reaction, such as with water. Examples of blocked isocyanates include those that have been co-reacted with phenol, methyl ethyl ketoxime, and epsilon-caprolactam. Examples of blocked active-hydrogen containing compounds include aldehyde or ketone blocked amines (known as ketimines); aldehyde blocked aminoalcohol (known as oxazolidines); and amines that have been complexed with a salt such as sodium chloride.

When blocked isocyanates are used, examples of suitable co-reactants include polyether polyols such as poly(oxypropylene) glycols, ethylene oxide capped poly(oxypropylene) glycols, and poly(oxytetramethylene) glycols; diamino poly(oxypropylene) glycols; aromatic amine terminated poly(propylene ether) glycols; styrene-acrylonitrile graft polyols; poly(oxyethylene) polyols; polyester polyols such as polyglycol adipates, polyethylene terephthalate polyols, and polycaprolactone polyols; polybutadiene polyols, hydrogenated polybutadiene polyols, polythioether polyols, silicone carbinol polyols, polybutylene oxide polyols, acrylic polyols, carboxy-functional polypropylene oxide polyols, carboxy functional polyester polyols; and aromatic amine-terminated poly(tetrahydrofuran). Suitable urethane resins include blocked urethanes such as that available under the trade designation "Adeka Resin QR-9276" from Asahi Denka Kogyo K. K. Tokyo, Japan, and urethane modified epoxides such as that available under the trade designation "Rutapox VE 2306" from Rutgers Bakelite GmbH, Duisburg, Germany.

Suitable cyanate ester materials (monomers and oligomers) are those having two or more - OCN functional groups, including those described in U.S. Pat. No. 5,143,785, incorporated herein by reference. Examples of suitable cyanate ester compounds include the following: 1,3-and 1,4-dicyanatobenzene; 2-tert-butyl-1,4-dicyanatobenzene; 2,4-dimethyl-1,3-dicyanatobenzene; 2,5-di-tert-butyl-1,4-dicyanatobenzene; tetramethyl-1,4-dicyanatobenzene, 4-chloro- 1,3-dicyanatobenzene; 1,3,5-tricyanatobenzene; 2,2, -or 4,4, -dicyanatobiphenyl; 3,3', 5,5',-tetramethyl-4,4',-dicyanatobiphenyl; 1,3-, 1,4-, 1,5-, 1,6-, 1,8-, 2,6-, or 2,7-dicyanatonaphthalene; 1,3,6-tricyanatonaphthalene; bis(4-cyanatophenyl)methane; bis(3-chloro-4-cyanatophenyl)methane; bis(3,5-dimethyl-4-cyanatophenyl)methane; 1,1-bis(4-cyanatophenyl)ethane; 2,2-bis(4-cyanatophenyl)propane; 2,2-bis(3,5-dibromo-4-cyanatophenyl)propane; 2,2-bis(4-cyanatophenyl)-1,1,1,3,3,3-hexafluoropropane; bis(4-cyanatophenyl)ether; bis(4-cyanatophenoxyphenoxy)benzene; bis(4-cyanatophenyl)ketone; bis(4-cyanatophenyl)thioether; bis(4-cyanatophenyl)sulfone; tris(4-cyanatophenyl)phosphite; and tris(4-cyanatophenyl)phosphate. Polycyanate compounds obtained by reacting a phenolformaldehyde precondensate with a halogenated cyanide are also suitable.

Other suitable materials include cyanic acid esters derived from phenolic resins as described in U.S Pat. No. 3,962,184, cyanated novolac resins derived from novolac resins as described in U.S. Pat. No. 4,022,755, cyanated bisphenol-type polycarbonate oligomers derived from bisphenol-type polycarbonate oligomers as described in U.S. Pat. No. 4,026,913, cyanato-terminated polyarylene ethers as described in U.S. Pat. No. 3,595,900, dicyanate esters free of ortho hydrogen atoms as described in U.S. Pat. No. 4,740,584, mixtures of di-and tricyanates as described in U.S. Pat. No. 4,709,008, polyaromatic cyanates containing polycyclic aliphatics as described in U.S. Pat. No. 4,528,366, fluorocarbon cyanates as described in U.S. Pat. No. 3,733,349, and other cyanate compositions as described in U.S. Pat. Nos. 4,195,132 and 4,116,946, all of which are incorporated herein by reference. An exemplary commercially available material is a cyanate ester available from Ciba Performance Polymers, Brewster, N.Y. under the trade designation "Quatrex 7187".

Suitable phenolic resins are generally described in Encyclopedia of Polymer Science and Engineering, Volume 11, John Wiley & Sons, Inc. (New York, 1988), pp. 45-92. Phenolic-based resins are generally described in Alphonsus V. Pocius, Adhesion and Adhesives Technology: An Introduction, Hanser Publishers (New York, 1997), pp.185-188. Preferred phenolic resins that can be used to impregnate a sheet which is suitable to prepare hot press laminated products from wood veneers are discussed in U.S. Pat. No. 1,960,176, incorporated herein by reference. Suitable phenolic materials are those made as the reaction product of phenols and formaldehydes, including resole phenolics and novolac phenolics. Examples of phenols include phenol, resorcinol, para-substituted phenol, cresol, and the reaction product of bisphenol A and the monoglycidyl ether of bisphenol A. Exemplary phenolic-based bondable layers include tissue paper impregnated with a thermosetting phenolic resin at a ratio of approximately two parts resin to one part tissue paper commercially available under the trade designation "Phenolic Glue Film" from Dyno Overlays Inc., High Point, N.C.

Resole phenolic resins are characterized by being alkaline catalyzed and having a molar ratio of formaldehyde to phenol of greater than or equal to 1:1. Typically, the ratio of formaldehyde to phenol is within a range of about 1:1 to about 3:1. Examples of suitable alkaline catalysts for preparing resole phenolic resins include sodium hydroxide, potassium hydroxide, organic amines, or sodium carbonate.

Novolac phenolic resins are characterized by being acid catalyzed and having a molar ratio of formaldehyde to phenol of less than 1:1. Typically, the ratio of formaldehyde to phenol is within a range of about 0.4:1 to about 0.9:1. Examples of the acid catalysts used to prepare novolac phenolic resins include sulfuric, hydrochloric, phosphoric, oxalic, or p-toluenesulfonic acids. Although novolac phenolic resins are typically considered to be thermoplastic resins rather than thermosetting resins, they can react with other chemicals (e.g., hexamethylenetetraamine) to form a thermoset resin. Examples of useful commercially available resole or novolac phenolic resins include "Varcum" from BTL Specialty Resins Corporation, Blue Island, Ill.; "Arofene" from Ashland Chemical Company, Columbus, Ohio; "Bakelite" from Union Carbide, Danbury, Conn.; and "Resinox" from Monsanto Chemical Company, St. Louis, Mo.
Suitable nitrile phenolic materials include those made by including butadiene-nitrile elastomers in novolac phenolic resin-based materials. Examples of suitable nitrile phenolic based bondable layers that are commercially available in film form include those available from Minnesota Mining and Manufacturing Company ("3M"), St. Paul, Minn. under the trade designation "3M Scotch-Weld Structural Adhesive Film" and having the following "AF" designations: "AF 10", "AF 30", "AF 31" and "AF 32".

Examples of suitable bismaleimide materials, also known as N,N-bismaleimide monomers and prepolymers, include the N,N'-bismaleimides of 1,2-ethanediamine, 1,6-hexanediamine, trimethyl-1,6-hexanediamine, 1,4-benzenediamine, 4,4'-methylene-bis(benzenamine), 2-methyl-1,4-benzenediamine, 3,3'-methylene-bis(benzenamine), 3,3'-sulfonyl-bis(benzenamine), 4,4'-sulfonyl-bis(benzenamine), 3,3'-oxy-bis(benzenamine), 4,4'-oxy-bis(benzenamine), 4,4'-methylene-bis(cyclohexanamine), 1,3-benzenedimethanamine, 1,4-benzenedimethanamine, and 4,4'-cyclohexane-bis(benzenamine) and mixtures thereof; Other N,N'-bis-maleimides and their process of preparation are described in U.S. Pat. Nos. 3,562,223; 3,627,780; 3,839,358; and 4,468,497, all of which are incorporated herein by reference. Representative examples of commercially available bismaleimide materials include the series of materials available from Shell Chemical, Houston, Tex. under the trade designation "COMPIMIDE" such as 4,4'-bismaleimidodiphenyl methane ("COMPIMIDE Resin MDAB"), and 2,4'-bismaleimidotoluene ("COMPIMIDE Resin TDAB"), and from Dexter/Quantum, San Diego, Calif. under the trade designation "Q-Bond".

A thermosetting bondable layer preferably comprises a thermosetting material and a curative or curatives. The term "curative" is used broadly to include not only those materials that are conventionally regarded as curatives but also those materials that catalyze or accelerate the reaction of the curable material as well as those materials that may act as both curative and catalyst or accelerator. It is also possible to use two or more curatives in combination.

Preferred heat activated curatives for use in the present invention exhibit latent thermal reactivity; that is, they react primarily at higher temperatures (preferably at a temperature of at least 80° C.), or react at lower temperatures only after an activation step such as exposure to actinic radiation. This allows the adhesive composition to be readily mixed and coated at room temperature (about 23 ± 3° C.) or with gentle warming without activating the curative (i.e., at a temperature that is less than the reaction temperature for the curative). One skilled in the art would readily understand which curatives are appropriate for each class of thermosetting materials.

Suitable curatives for epoxide polymerization include polybasic acids and their anhydrides; nitrogen-containing curatives; chloro-, bromo-, and fluoro-containing Lewis acids of aluminum, boron, antimony, and titanium; photochemically activated generators of protic or Lewis acids; and phenolic materials as described above. Exemplary polybasic acids and their anhydrides include di-, tri-, and higher carboxylic acids such as oxalic acid, phthalic acid, terephthalic acid, succinic acid, alkyl substituted succinic acids, tartaric acid, phthalic anhydride, succinic anhydride, malic anhydride, nadic anhydride, pyromellitic anhydride; and polymerized acids, for example, those containing at least 10 carbon atoms, such as dodecendioic acid, 10,12-eicosadiendioic acid, and the like.

Nitrogen-containing curatives include, for example, dicyandiamide, imidazoles (e.g. hexakis(imidazole) nickel phthalate), imidazolates, dihydrazides (e.g. adipic dihydrazide and isophthalic dihydrazide), ureas, and melamines, as well as encapsulated aliphatic amines (e.g., diethylenetriamine, triethylenetetraamine, cyclohexylamine, triethanolamine, piperidine, tetramethylpiperamine, N,N-dibutyl-1,3-propane diamine, N,N-diethyl-1,3-propane diamine, 1,2-diamino-2-methyl-propane, 2,3-diamino-2-methyl-butane, 2,3-diamino-2-methyl-pentane, 2,4-diamino-2,6-dimethyl-octane, dibutylamine, and dioctylamine). The term "encapsulated" as used herein means that the amine is surrounded by a material that prevents it from acting as a curative until the application of heat. Polymer bound amines or imidazoles may also be used. Pyridine, benzylamine, benzyldimethylamine, and diethylaniline are also useful as heat activated curatives.

Examples of nitrogen-containing curatives include those commercially available from Air Products, Allentown, Pa., under the trade designations, "Amicure CG-1200", "AMICURE CG-1400", "Ancamine 2337", "Ancamine 2441" "Ancamine 2014"; and those from Asahi Denka Kogyo K. K. Tokyo, Japan, under the trade designations "Ancamine 4338S" and "Ancamine 4339S"; those from CVC Specialty Chemicals, Mapleshade, N.J., under the trade designations "Omicure U-52" and "Omicure U-410" as well as the other materials in the "Omicure" series; those from Landec, Menlo Park, Calif., under the trade designations "Intellimer 7001", "Intellimer 7002", "Intellimer 7004", and "Intellimer 7024"; those from Shikoku Fine Chemicals, Japan, and sold by Air Products, as the series of materials available under the trade designation "Curezol"; and those from Ajinomoto Company Inc., Teaneck, N.J., as the series of materials available under the trade designation "Ajicure".

Exemplary chloro-, bromo-, and fluoro-containing Lewis acids of aluminum, boron, antimony, and titanium include aluminum trichloride, aluminum tribromide, boron trifluoride, antimony pentafluoride, titanium tetrafluoride, and the like. Preferably, these Lewis acids may be blocked to increase the latency of the thermosetting material. Representative blocked Lewis acids include BF₃ -monoethylamine, and the adducts of HSbF₅ X, in which X is halogen, --OH, or --OR¹ in which R¹ is the residue of an aliphatic or aromatic alcohol, aniline, or a derivative thereof, as described in U.S. Pat. No. 4,503,211, incorporated herein by reference.

Suitable photochemically activated curatives for epoxide polymerization include cationic photocatalysts that generate an acid to catalyze polymerization. It should be understood that the term "acid" can include either protic or Lewis acids. These cationic photocatalysts can include a metallocene salt having an onium cation and a halogen containing complex anion of a metal or metalloid. Other useful cationic photocatalysts include a metallocene salt having an organometallic complex cation and a halogen-containing complex anion of a metal or metalloid which are further described in U.S. Pat. No. 4,751,138 (e.g., column 6, line 65 to column 9, line 45). Other examples of useful photocatalysts include organometallic salts and onium salts, for example, those described in U.S. Pat. No. 4,985,340 (e.g., col. 4, line 65 to col. 14, line 50) and in European Patent Applications 306,161 and 306,162. Still other cationic photocatalysts include an ionic salt of an organometallic complex in which the metal is selected from the elements of Periodic Group IVB, V 13, VIB, V1113 and VIIIB which is described in European Patent Application 109,581. A suitable photochemically activated curative is a curative commercially available from Ciba-Geigy, Hawthorne, N.Y. under the trade designation "Irgacure 261".

Suitable curatives for urethane materials include the nitrogen-containing curatives as described for use with epoxides (which can react with a blocked isocyanate group after the deblocking reaction to give a urea) as well as, for example, materials containing hydroxyl (e.g., phenols) or thiol functionality that can react with the deblocked isocyanate. Photochemically activated generators of protic or Lewis acids can be used to enhance these reactions.

Suitable curatives for cyanate ester materials include the nitrogen-containing curatives as described for use with epoxides as well as curatives that may be thermally or photochemically activated. Examples of such curatives include organometallic compounds containing a cyclopentadienyl group (C₅ H₅) and derivatives of a cyclopentadienyl group. Suitable curatives include cyclopentadienyl iron dicarbonyl dimer ([C₅ H₅ Fe(CO)₂]₂), pentamethylcyclopentadienyl iron dicarbonyl dimer ([C₅ (CH₃)₅ Fe(CO)₂]₂), methylcyclopentadienyl manganese tricarbonyl (C₅ H₄ (CH₃)Mn(CO)₃), cyclopentadienyl manganese tricarbonyl (C₅H₅ Mn(CO)₃), all of which are available from Strem Chemical Company, Newburyport, Mass. Other suitable curatives include the hexafluorophosphate salt of the cyclopentadienyl iron mesitylene cation (C₅ H₅ (mesitylene)Fe⁺ PF₆⁻), and the trifluoromethanesulfonate salt of the cyclopentadienyl iron mesitylene cation (C₅ H₅ (mesitylene)Fe⁺ (CF₃ SO₃⁻)), both of which may be prepared by methods described in U.S. Pat. No. 4,868,288 which is incorporated herein by reference.

Suitable curatives for phenolic materials and for nitrile phenolic materials include hexamethylene tetraamine (a latent source of formaldehyde) as well as combinations of organic acids (e.g. phosphoric acid, para toluene sulfonic acid, and salicylic acid) and metallic oxides (e.g. zinc oxide and magnesium oxide).

Suitable curatives for bismaleimide materials include the nitrogen containing curatives as described for use with epoxides as well as latent sources of allyl phenol.

In an alternative embodiment, the activatable adhesive composition may be based on a thermoplastic material. Suitable thermoplastic materials include, for example, polyesters, ethylene vinyl acetate (EVA), polyurethanes, polyamides, polyolefins, and derivatives thereof. The term "derivative" as used herein with reference to thermoplastic materials refers to a base molecule with additional substituents that are not reactive towards a crosslinking or polymerization reaction. Thermoplastic materials, by nature, typically do not require curatives.

A hybrid material, as a further embodiment of the activatable adhesive composition, is a combination of at least two components wherein the at least two components are compatible in the melt phase (the melt phase is where the combination of the at least two components is a liquid), the at least two components form an interpenetrating polymer network or semi-interpenetrating polymer network, and at least one component becomes infusible (i.e., the component cannot be dissolved or melted) after application of heat or by other means of curing such as application of light. A first component is a crosslinkable material and a second component is (a) a thermoplastic material, (b) monomers, oligomers, or polymers (and any required curative) which can form a thermoplastic material, (c) a thermosetting material, i.e., monomers, oligomers, or prepolymers (and any required curative) which can form a thermosetting material. The second component is chosen so that it is not reactive with the first component. It may be desirable, however, to add a third component which may be reactive with either or both of the crosslinkable material and second component for the purpose of, for example, increasing the cohesive strength of the bonded hybrid material.

Suitable first components include thermosetting materials, for example, the thermosetting materials described above, as well as crosslinkable elastomers such as acrylics and urethanes as described above.

Suitable thermoplastic second components include those thermoplastic materials described above. Suitable thermoplastics which can be formed in situ, i.e., with monomers, oligomers, or polymers (and any required curative) which can form a thermoplastic material without undergoing any significant crosslinking reaction would be readily apparent to one skilled in the art. Exemplary hybrid materials incorporating a second component (a) are described, for example, in PCT/EP98/06323; U.S. Pat. No. 5,709,948, and U.S. Ser. No. 09/070,971, all of which are incorporated herein by reference. Exemplary hybrid materials incorporating a second component (b) are described, for example, in U.S. Pat. No. 5,086,088, which is incorporated herein by reference. Example 1 of U.S. Pat. No. 5,086,088 illustrates an example of a thermoplastic material formed in situ.

Suitable thermosetting second components include those thermosetting materials described above. Exemplary hybrid materials incorporating a second component (c) are described, for example, in U.S. Pat. No. 5,494,981, which are incorporated herein by reference.

A particularly preferred activatable adhesive composition is an epoxy based composition as disclosed in US 6,506,494. Thus, in this embodiment, the activatable adhesive composition comprises:
A) an epoxy resin capable of being cured to a cured epoxy resin when exposed to an activated latent curative system;
B) a latent curative system in an amount sufficient to cure said epoxy resin, comprising (a) at least one epoxy resin miscible first curative comprising a latent hardener, selected from dicyandiamide and its derivatives, contained substantially as a core within a multiplicity of ambient-temperature-stable, impermeable microcapsules having capsule walls comprised of a thermoplastic polymeric material and (b) at least one epoxy resin latent second curative comprising a latent accelerator which is a metal imidazolate compound. The metal imidazolate may be a compound of the formula:

   MLₘ
wherein M is a metal selected from the group of Ag(I), Cu(I), Cu(II), Cd(II), Zn(II), Hg(II), Ni(II) and Co(II),
L is an imidazolate of the formula: 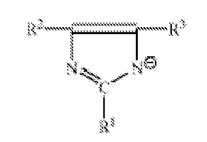 wherein R¹, R², and R³ are selected from a hydrogen atom, an alkyl radical typically having 1 to 10, preferably 1 to 6 carbon atoms or an aryl radical typically having 6 to 18, preferably 6 to 12 carbon atoms and m is the valence of M, in an amount sufficient when activated to cure said epoxy resin admixed uniformly within said curable epoxy resin, wherein the microcapsule walls isolate the first curative from the second curative.

The exemplary activatable adhesive compositions referred to above may be used singly or in combinations of two or more compatible representatives thereof in the adhesive layer of the adhesive articles of the present invention.

### Pressure sensitive adhesive (PSA)

The pressure sensitive adhesive which may be present in the adhesive layer of the presently claimed adhesive articles is preferably an acrylic based pressure sensitive adhesive, but other pressure sensitive adhesives are contemplated as well and may be used. Such other pressure sensitive adhesives include for example those based on silicones or based on polyolefins as disclosed in Handbook of Pressure Sensitive Adhesive Technology (third edition) D. Satas, Ed. Satas and Associates, Warwick RI/USA, 1989 on pages 550-556 and 423-442 respectively.

Particular examples of suitable pressure sensitive adhesives useful in the pressure sensitive adhesive domains include, but are not limited to, adhesives based on general compositions of poly(meth)acrylate; polyvinyl ether; diene rubber such as natural rubber, polyisoprene, and polybutadiene; polyisobutylene; polychloroprene; butyl rubber;butadiene-acrylonitrile polymer; thermoplastic elastomer; block copolymers such as styrene-isoprene and styrene-isoprene-styrene (SIS) block copolymers, ethylene-propylene-diene polymers, and styrenebutadiene polymers; poly-alpha-olefin; amorphous polyolefin; silicone; ethylene-containing copolymer such as ethylene vinyl acetate, ethylacrylate, and ethyl methacrylate; polyurethane; polyamide; epoxy; polyvinylpyrrolidone and vinylpyrrolidone copolymers; polyesters; and mixtures or blends of the above. The pressure sensitive adhesive composition may contain additives including, but not limited to, tackifiers, plasticizers, fillers, antioxidants, stabilizers, pigments, diffusing materials, curatives, fibers, filaments, and solvents.

Pressure sensitive adhesives that may be used to preliminarily bond to substrates having a low surface energy or oily surfaces, include for example pressure sensitive adhesives based on an acrylic copolymer of one or more alkyl esters of acrylic or methacrylic acid and a vinyl ester as disclosed in for example EP 1 318 181 or a pressure sensitive adhesive as disclosed in EP 1 245 656 which discloses a pressure sensitive adhesive composition that contains (i) the reaction product obtainable from a precusor composition comprising one or more alkyl esters of acrylic or methacrylic acid, one or more copolymerizable monomers that have a Lewis base functionality and optionally one or more cross-linkers and (ii) one or more tackifying resins. Still further pressure sensitive adhesive that may be particularly useful for adhesion to an oily surface are disclosed in WO 95/13331.

Suitable commercially available pressure sensitive adhesives include those commercially available from 3M Company under the designation VHB.

The thickness of the adhesive layer is generally in a range of 0.05 mm to 0.5 mm preferably 0.1 mm to 0.3 mm.

Preferably, the adhesive articles according to the invention are compressible when they are adjusted to one or more substrates. More preferably, the adhesive articles according to the invention can be reversibly compressed showing recoverable deformation of at least 10 %, preferably at least 20 % or even 30 % along the thickness direction of the fibrous web. In the context of the present invention, an adhesive article is considered to be reversibly compressible if, after removal of the load which is required to induce a reduction of the thickness of the article by the given percentage, the article returns to at least 90 % of its original thickness. After their application to a substrate, the adhesive articles may be treated to loose or reduce their compressibility.

The compressibility of the adhesive article may be expressed by a compressibility value which represents the reciprocal value of the load per unit area (i.e. the pressure) which must be applied to achieve a certain percentage reduction of the initial thickness. For example, the 50% compressibility value represents the reciprocal value of the load per unit area which must be applied to achieve a 50% reduction of the initial thickness. The 50 % compressibility value (C₅₀) of the adhesive article according to the present invention in its thickness direction, typically varies between 100 MPa⁻¹ and 1000 MPa⁻¹, depending on the intended use preferably 200 MPa⁻¹ to 500 MPa⁻¹. Values for the 30 % compressibility (C₃₀), which represents the reciprocal value of the load per unit area which must be applied to achieve a 30 % reduction of the initial thickness, often range between 500 MPa⁻¹ and 2000 MPa⁻¹. Values for the 10 % compressibility (C₁₀), which represents the reciprocal value of the load per unit area which must be applied to achieve a 10 % reduction of the initial thickness, often range between 1000 MPa⁻¹ and 4000 MPa⁻¹.

The compressibility values, C₁₀, C₃₀ or C₅₀ respectively, may be determined by introducing a test specimen between two flat compression plates such that its first and second major surface are in good contact with the plates. The plates may be mounted, e.g. by means of T-pieces attached to the sides of the compression plates opposite to those in contact with the test piece, in a tensile tester operated in compression mode. The non-compressed thickness is attained when the sample is held flat between the compression plates and the load indicated by the tensile tester starts to increase. At 10 %, 30 % or 50 % compression, the corresponding load values are observed and the compressibility values are calculated taking into account the surface area of the specimen. The tensile tester, such as an Instron 4501, may be operated at any suitable crosshead speed such as 1 mm/min.

In addition to the fiber material and the adhesive layer(s), the adhesive articles of the present invention may be provided with one or more release liners to protect an outer surface of an adhesive layer. Typically, the release liner comprises a film or paper substrate coated with a release material.

The adhesive articles according to the invention may be in the form of sheets, tapes, preferably those having a rectangular cross-section, or pads of varying geometry. The thickness of the adhesive articles often varies between 2 mm and 40 mm, preferably between 3 mm and 30 mm.

The adhesive articles according to the invention may be produced by providing a fibrous web as defined above, e.g. via vertical cross lapping, and providing one or both major surfaces of the web with an adhesive layer. Suitable methods include a method of pressing together an adhesive film formulation and the fibrous web. Alternatively, the adhesive compositions may be formulated as a fluid and may be coated as such on the fibrous web surface. Suitable methods for coating are not limited and include a method of applying a solution or suspension of an adhesive composition, e.g. by spraying, roll coating, extrusion, coextrusion, flow coating, microfiberisation etc., optionally accompanied or followed by a step of drying or further treatment such as heat processing or exposure to radiation to effect further chemical or physical change in the applied composition.

Alternatively, the fibrous web may be produced on an adhesive layer, e.g. by a flocking technique as described above. This technique allows a very accurate fiber placement. To from an article having two adhesive layers, the major surface opposite to the first adhesive layer may be coated with an adhesive layer as describes above. Alternatively, two of the brush like structures obtained in a flocking process can be pushed together so as to achieve an engagement of their fibers. This can be done in a similar way to pushing two brushes together, bristle to bristle. The fibers of the fibrous web can be coated with an adhesive system to enable fiber locking during an oven bake cycle, or not, depending on requirements. Such double-coated films can provide variable gap fill for numerous applications requiring adhesion or sealing of variable volume joints. A typical application could be roof ditch applications where variable depth may be required front to back.

The method of activation to form a bond between the adhesive article and a substrate to which it is applied depends on the adhesive composition present in the adhesive layer and can be suitably selected for a variety of applications. Generally, the adhesive film is activated and bonds much more quickly and more uniformly than bulk adhesive systems, because there is very little mass of the adhesive. Only the very thin outer layer of adhesive cures/polymerizes and this does not result in a normal contraction force, which could damage the surface of the substrate. Thus, there is no read-through due to the fact that there is no net volume reduction because the bulk of the gap filling system does not cure/polymerise. Cure is also completely uniform due to low mass.

For example in heat activatable adhesives, cure temperatures are reached rapidly. In addition there is typically no exotherm, so the probability of adhesive overheating or charring is negligible. In addition, because the fibrous web is porous, any residual liquids, such as pre-electrocoat washing solutions present on parts to be bonded in the automotive industry, will drain rapidly away through the adhesive and any remaining moisture will evaporate rapidly during heat activation.

The adhesive articles of the present invention are suitable for a variety of applications which require bonding, filling, dampening, sealing or stiffening properties.

For example, the adhesive article according to the invention can be used to bond a variety of substrates, such as metal sheets or panels, plastic or composite materials as they are used, e.g. in automotive and aerospace applications. In a particular embodiment, the adhesive article is used to bond to a component of a transportation vehicle, in particular a component of a motor vehicle such as a car, a bus, a truck or other motor vehicle for use on a road. In a further embodiment, the adhesive article is used to bond components of such a transportation vehicle such as aircraft, boats busses, trains, in particular motor vehicle for use on the road, together. Still further, the adhesive article may be suitably used for gap filling purpose in the aforementioned vehicles.

The adhesive articles according to the invention have particular advantages in joints with a non-uniform distance between the substrates to be joined, such as wedge shaped joints. In such a case, he fibrous web may bridge and support an important gap at the wide end of the wedge. Further into the joint, the fibers are more compressed so that areas of high bond strength are achieved at the narrow end of the wedge. Another example relating to the automotive industry is the use to join door inners to outers by using a complete sheet of the adhesive article between inner and outer panels. This offers maximum bonds strength in contact areas and good support and gap fill in other regions and leads to a high impact resistance lightweight door structure without the need for use of any additional adhesives. In addition it offers good sound and vibration insulation to the whole door structure.

This adhesive articles according to the invention can also be applied to a substrate, such as a sheet or a panel of metal, plastic or of a composite material, and the fibrous web can be rendered stiff by any of the methods set out above, such as fiber linkage, melting or any other form of chemical cure. In such an application, adhesive articles are preferably used which are provided on only one of their major surfaces with an adhesive layer. The effect of such an adhesive article would be to stiffen the substrate to which it is applied by formation of a thicker component. The benefit of this is to enhance performance, reduce denting and dampen vibration e.g. on car hoods, doors, roofs and van and truck doors and roofs. Application as a fibrous web ensures easy and safe handling.

### Examples

### Used Materials

All examples consist of two basic components. First a structural epoxy film adhesive and second a fibrous web.
The structural epoxy film adhesive used for all examples was 6068 (commercially available from 3M Company, St. Paul, MN, USA)
The fibrous webs were all made by vertical cross-lapping technology (VCL) using different types of staple fibres listed later in table 1.

For examples 1- 315 den polyethylene terephtalate (PET) staples fibres were used. They are available from Inquitex SA /Spain, under the commercial name PET fibre type 101. The typical length of these polyethylene terephtalate (PET) staple fibres were between 38 to 42 mm.

Example 7 used 50 den polyethylene terephtalate (PET) staples fibres manufactured by 3M Company in Praire du Chien (USA) .The typical length of these polyethylene terephtalate (PET) staple fibres was 50mm.

For examples 4-6 17 den Nylon 6.6 staples fibres were used. They are commercially available by Rhodia as R164. The typical length of these Nylon 6.6 staple fibres was 60 mm.

The thermal bond fibres used for examples 1-6 were bicomponent fibres (BICO), being composed of a copolymer polyethylene terephtalate/ polyethylene isophtalate (outer part) and a homopolymer polyethylene terephtalate (inner part)― having an average staple length of 50mm and a diameter of 4.4den , commercially available by Tangerding,Germany.

The thermal bond fibre used for example 7 was also a bicomponent fibre (BICO), manufactured by 3M Company in Praire du Chien, USA, having a staple length of typically 50 mm and a diameter of 15den.

### Preparation of the fibrous webs

For manufacturing the different fibrous webs, small batches (100g) of the fibre blend comprising of 80% staple fibres and 20% thermal bond BICO fibres were mixed by hand. These batches were then hand fed into a single cylinder card at a constant rate. The carded web was then cross-lapped and lightly needle punched and then folded in half along its length. This feed web was then used to feed a second single cylinder card, which provided the web used for vertical cross-lapping (VCL). The vertical cross -lapping process was run on a Struto machine (developed in the Czech Republic at the University of Liberec) set up with a web thickness of 10 mm and the thermal bond oven run at 140°C with a double belt feed system. The Struto process uses a bar to force the fibres into a vertical orientation. Such a process pushes the ends of the fibres at the point when the direction is changed out of the loop giving a highly oriented product in the z-direction.

**Table 1**

| ID | Fibre 1 (staple fibre) | % | Fibre 2 (thermal bond fibre) | % | Web weight (gsm) |
|---|---|---|---|---|---|
| 1 | 15 den PET | 80 | 4.4 den Bico | 20 | 165 |
| 2 | 15 den PET | 80 | 4.4 den Bico | 20 | 80 |
| 3 | 15 den PET | 80 | 4.4 den Bico | 20 | 300 |
| 4 | 17 den Nylon | 80 | 4.4 den Bico | 20 | 100 |
| 5 | 17 den Nylon | 80 | 4.4 den Bico | 20 | 150 |
| 6 | 17 den Nylon | 80 | 4.4 den Bico | 20 | 200 |
| 7 | 50 den PET | 80 | 15 den Bico | 20 | 100 |

### Preparation of Test Assemblies

For most test assembly preparations (except oil resistance test, tensile strength test and compressibility test) one-side ground steel panels (available as RS/14 from Q-Panel Company Express Trading Estate, Farnworth, Bolton, BL49TP, U.K) were selected.
The panels were 0.8 mm thick and had dimensions of 10.2 mm by 15.2 mm. No cleaning was conducted prior to assembling the panels with the adhesive articles, as these panels were supplied in oil in order to avoid corrosion. The oil tends to evaporate in the oven bake cycle at approximately 180°C.

For measurement of oil resistance an adhesive sheet of 3M 6068 Structural Adhesive Film (commercially available from 3M Company, St. Paul, MN, USA) was applied to both surfaces of a 300 gsm vertical-cross lapped material made of 15 den polyethylene terephtalate (PET) fibres (80%) and 4.4 den BICO fibres (20%) (see table 1, example 3). This construction was applied to a 0.8 mm thick steel panel (60G60GEL) with the dimensions 25mm X 100 mm X 0.8 mm and excess fibrous web/adhesive cut away from the edges by trimming with scissors. After this step the double-sided pad construction consisting of 3M Structural Adhesive Film 6068 ―fibrous web― 3M Structural Adhesive Film 6068, was applied to a similar but larger steel panel (300 mm X 400 mm) which had been oiled to a coating weight of 2 grams per square metre using Quaker oil RP4107S.

For measurement of compressibility values of the selected fibrous webs in their thickness direction, first compression plates were manufactured by bonding two sheets of 1.6mm thick cold rolled steel plates of dimensions 101mm X 152mm in their centres to aluminium T-pieces of base dimensions 38mm X 38mm square. These compression panels were mounted in the upper and lower jaws of a Instron Tensile Tester and the fibrous web test specimens placed over the full surface contact area of the lower compression plate (15352 mm²).The upper compression plate was then slowly lowered until just in contact with the fibrous web test specimens. Two different fibrous webs were selected for compressibility testing. First a vertical cross-lapped fibrous web of initial height 15mm and second a non vertical cross-lapped fibrous web of initial height 16mm.

For dynamic overlap shear testing (according to test method ASTM 1002-94) 3M 6068 Structural Adhesive Film (commercially available from 3M Company, St. Paul , MN, USA) was used. The adhesive film was placed onto the one-side ground steel panels and the vertical cross-lapped fibrous webs positioned in two different ways ― once with the corrugations in the pull direction and the other time across it.

For the measurement of thickness reduction 3M 6068 Structural Adhesive Film (commercially available from 3M Company, St. Paul, MN, USA) was used. The adhesive film was placed on the first and second major sides of the vertical cross-lapped fibrous webs.

Next the double-sided pad construction consisting of 3M Structural Adhesive Film 6068 - fibrous web - 3M Structural Adhesive Film 6068, was placed between two one-side ground steel panels.

For measurement of tensile strength of the adhesive articles in their thickness direction, three different kinds of test assemblies were prepared. All test assemblies had in common that the test panels were constructed from T-bar aluminium extrusions of face dimensions 38.1.mm X 38.1 mm, having a face plate thickness of 3.4 mm.
All test assemblies were then prepared by application of 0.3mm 3M Structural Adhesive Film 6068 to the cleaned surfaces of an aluminium T-piece test jig. These were attached to opposing major surfaces of a 15 den PET (80%), 4.4 den BICO (20%) 300 g/m² fibrous web.
For the first test assembly set-up, the base surfaces of the aluminium T-pieces were clamped together to compress the fibrous web in its thickness direction, whereas the second test assembly set-up was without clamps to avoid compression of the fibrous web. For the third test assembly set-up the base surfaces of the aluminium T-pieces were clamped together to compress the fibrous web in its thickness direction, but spacers were inserted between the surface of the T-pieces so that compression was reduced when compared to the first test assembly set-up.

### Test Methods

### Oil Resistance

All test assemblies were placed vertically in an oven after a dwell time of 30 minutes. The oven was heated in 10 minutes to 180°C and kept at 180°C for 30 minutes before cool down. Initial hold and positioning (incl. vertical positioning during start-up of the bake cycle) with focus on adhesive slippage was then visually observed.

### Compressibility Test

The compressibility values were determined by placing the fibrous web test specimens between two flat compression plates such that the fibrous webs opposing sides were in full surface contact with the plates. The compression plates were mounted by means of aluminium T-pieces attached to the sides of the compression plates opposite to those in contact with the fibrous webs, in a Instron Tensile Tester operated in compression mode. The non-compressed thicknesses were evaluated when the fibrous web test specimens were held flat between the compression plates and the load indicated by the Instron Tensile Tester started to increase. At 50 % compression, the corresponding load values were registered and the compressibility values were calculated taking into account the contact surface area of the test specimen. The Instron Tensile Tester was operated at a crosshead speed of 1 mm/min.

### Dynamic Overlap Shear

The test assemblies were pushed together by hand and conditioned at 23°C and 50% relative humidity for 24 hours before testing.

The test assemblies were then placed in a forced air oven and the temperature was raised to 180 °C according to the following programmed profile:
- The oven temperature was ramped up from 23°C in 10 minutes to 180°C
- The oven temperature was then held at 180°C for 30 minutes
- After 30 minutes the oven was turned off, the oven door opened and the sample allowed to remain in the oven until cooled out. After the test assembly removal from the oven the curing cycle of the adhesive was seen as completed

The cured test assembly was conditioned at 23°C and 50% relative humidity for 24 hours prior to testing.

The dynamic overlap shear test was then conducted according to ASTM 1002-94 Test Method. The test laminate was pulled apart in the shear mode using an Instron tensile tester at a crosshead speed of 13 mm / min at room temperature. The test was conducted in an identical manner for samples with corrugations in pull or cross direction.

Tests were repeated three times for each direction and the results averaged. Results were recorded in N.

### Thickness Reduction

Each test assembly was put together by hand and the initial thickness measured.
Test assemblies were then allowed to condition at 23°C and 50% relative humidity for 24 hours.
After conditioning the test assemblies were placed in a forced air oven and the temperature was raised to 180 °C according to the following programmed profile:
- The oven temperature was ramped up from 23°C in 10 minutes to 180°C
- The oven temperature was then held at 180°C for 30 minutes
- After 30 minutes the oven was turned off, the oven door opened and the sample allowed to remain in the oven until cooled out. After the test assembly removal from the oven the curing cycle of the adhesive was seen as completed

The cured test assemblies were allowed to condition at 23°C and 50% relative humidity for 24 hours prior to the second thickness measurement.
The percentage of the reduction in thickness between the initial thickness and the thickness after curing was determined and evaluated.

### Tensile Strength Test

The test assemblies were assembled manually and conditioned at 23°C and 50% relative humidity for 24 hours before testing.

The test assemblies were then placed in a forced air oven and the temperature was raised to 180 °C according to the following programmed profile:
- The oven temperature was ramped up from 23°C in 10 minutes to 180°C
- The oven temperature was then held at 180°C for 30 minutes
- After 30 minutes the oven was turned off, the oven door opened and the sample allowed to remain in the oven until cooled out. After the test assembly removal from the oven the curing cycle of the adhesive was seen as completed
The tensile strength test was then conducted on the previously described test assemblies using the shear mode on the Instron tensile tester at a cross head speed of 100 mm/min.

### Test Results

### Oil Resistance Test Results

This test was performed as previously described in the test method section using all 7 examples. Its intention was to check the effectiveness of the adhesive article when sticking to oily panels.
The steel panels were coated in Quaker RP4107S oil at 2 gsm. It was found that the structures had very good initial positioning and hold even when run through the bake cycle at 180°C. In the vertical position there was no adhesive slippage, which shows that there is good stress distribution in the adhesive as a result of the non-woven.

### Compressibility Test Results

The C50 values are represented by the reciprocal value of the load per unit surface contact area (between compression plates and the fibrous webs) which must be applied to achieve a 50% reduction of the fibrous webs initial thickness.
Please see the results listed in table 2:

**Table 2**

| Fibrous web | Surface Contact Area (mm²) | Load Increase (N) | C₅₀ (MPa⁻¹) |
|---|---|---|---|
| VCL web, | 15352 | 65 | 236 |
| initial height 15 mm | | | |
| non VCL web, initial height 16 mm | 15352 | 30 | 512 |

It can be seen that there was a higher load increase of 65 N for the first fibrous web versus a load increase of 30N for the second fibrous web. This clearly results in a nearly twice as high C₅₀ value for the second fibrous web sample, showing the improved compressibility behaviour of vertical cross-lapped fibrous webs.

### Dynamic Overlap Shear Test Results

Dynamic Overlap Shear Test were only performed on examples 1-6.The test results are shown in tables 3 and 4 :

**Table 3 - Shear Strength across corrugation**

| Sample ID | Shear Strength (N) |
|---|---|
| 1 | 143.6 |
| 2 | 115 |
| 3 | 141.7 |
| 4 | 153.3 |
| 5 | 112.5 |
| 6 | 115.4 |

**Table 4 - Shear Strength with corrugation**

| Sample ID | Shear Strength (N) |
|---|---|
| 1 | 121.0 |
| 2 | 110.7 |
| 3 | 120.4 |
| 4 | 128.8 |
| 5 | 96.0 |
| 6 | 101.5 |

When tested across the corrugations, the peak load is higher than the loads seen when tested in the axes of the pleats. The samples tested with the corrugations did not show much initial increase in load.

### Thickness Reduction Test Results

This test was conducted on all 7 examples, in order to determine the thickness reduction of the fibrous webs before and after curing. The percentage reduction in thickness between the uncured, initial samples versus the cured samples was measured. Results are shown in table 5:

**Table 5**

| Sample ID | Percentage reduction in thickness (%) |
|---|---|
| 1 | 50 |
| 2 | 70-80 |
| 3 | 50 |
| 4 | 20-30 |
| 5 | 50 |
| 6 | 25 |
| 7 | 70-80 |

It is apparent from the results in table 5 that the webs with higher basis weights typically showed less thickness reduction.

### Tensile Strength Test Results

This test was conducted on the previously described test assemblies. All test assemblies were using the same standard low density (300 gsm) vertical cross-lapped fibrous web.
Please see results listed in table 6.

**Table 6**

| | Description | Joint Gap (mm) | Breaking Force (N)* |
|---|---|---|---|
| 1 | With clamps, cured 30 min at 180°C | 0.9 | 8300 (5.72MPa) |
| 2 | No clamps, cured 30 min at 180°C | 8.0 | 296(0.2MPa) |
| 3 | With clamps, spacers, cured 30 min at 180°C | 4.4 | 288(0.2MPa) |

## Claims

1. Adhesive article comprising a fibrous web, said fibrous web having opposite first and second major surfaces, both of said first and second major surfaces being provided with an adhesive layer comprising an adhesive composition,
wherein said fibrous web has a thickness of at least 2 mm
and wherein at least a portion of said fibers in the fibrous web are in bonding engagement with the adhesive layers provided on said first and second major surface and extend from said first to said second major surface and or are capable of being bonded to each other so as to form fibers which extend from said first to said second major surface.

2. Adhesive article according to claim 1, wherein said adhesive composition comprises an activatable adhesive composition.

3. Adhesive article according to claim 2, wherein said activatable adhesive composition comprises a composition which is capable of being cross-linked upon activation by heat or upon activation by actinic radiation or electron beam irradiation or which is capable of being melted or softened upon exposure to heat so as to form an adhesive bond.

4. Adhesive article according to any of claims 1 or 3, wherein each of the adhesive layers extends into the fibrous web by not more than 30 % of the total thickness of the fibrous web.

5. Adhesive article according to any of claims 1 to 4, wherein said adhesive article can be reversibly compressed by at least 10 % along the thickness direction of the fibrous web.

6. Adhesive article according to any of claims 1 to 5, wherein the portion of fibers in the fibrous web extending from said first to said second major surface is 40 % or more, based on the total number of fibers in the fibrous web.

7. Adhesive article according to any of claims 1 to 6, wherein the fibrous web is a vertical cross lapped web.

8. Adhesive article according to any of claims 1 to 7 wherein said fibrous web comprises a composition that upon activation to heat, actinic radiation or electron beam irradiation causes a reduced compressibility or a loss of compressibility of the fibrous web.

9. Method of making an adhesive article as defined in any of claims 1 to 8 comprising the steps of
(i) forming a fibrous web having opposite first and second surfaces with a thickness of at least 2 mm wherein at least a portion of said fibers extend from said first to said second surface; and
(ii) applying an adhesive layer comprising an activatable adhesive composition to said first and second surface.

10. Method of bonding, comprising bonding the adhesive article of any of claims 1 to 8 to a first and second substrate so as to bond said first and second substrate to each other.

11. Method of increasing the stiffness of a substrate, comprising bonding the adhesive article according to any of claims 1 to 8 to at least one substrate.

12. Adhesive article comprising a fibrous web, said fibrous web having opposite first and second major surfaces, said first major surface being provided with an adhesive layer comprising an adhesive composition
wherein said fibrous web has a thickness of at least 2 mm and wherein at least a portion of said fibers in the fibrous web extend from said first major surface, where they are in bonding engagement with the adhesive layer provided on said first major surface, to said second major surface

13. Adhesive article according to claim 12, wherein the fibrous web comprises fibers which extend from said first major surface, where they are in bonding engagement with the adhesive layer provided on said first major surface, to said second major surface and which are capable of bonding to each other.

14. Method of bonding, comprising the steps of :
a) bonding a first adhesive article according to claim 12 by means of its adhesive layer to a first substrate;
b) bonding a second adhesive article according to claim 12 by means of its adhesive layer to a second substrate;
c) bringing the first substrate in proximity to the second substrate so that the adhesive articles are interposed between the first and the second substrate and at least a part of the fibers of the first and second adhesive article are engaged with each other; and
d) forming fiber-fiber bonds between the engaged fibers of the first and second adhesive article.

15. Use of an adhesive article of any of claims 1 to 8, 12 or 13 for bonding or stiffening components in a transportation vehicle.
